# EUROPÄISCHE PATENTANMELDUNG

(11) **EP 3 893 482 A1**
(43) Veröffentlichungstag der Anmeldung: **13.10.2021**
(21) Anmeldenummer: 20168426.3
(22) Anmeldetag: 07.04.2020
(51) Int. Cl.: H04N 5/225, H04N 5/232, B60R 1/00

(54) **TRANSPORTABLE AUFZEICHNUNGSEINRICHTUNG ZUR AUFNAHME VON DATEN FÜR EIN VERORTETES STRASSENZUGPANORAMABILD**

(71) Anmelder: Parkling GmbH, 10119 Berlin (DE)
(72) Erfinder: FRETTER, Christoph, 12435 Berlin (DE); HÜLSEBUSCH, Detlev, 10115 Berlin (DE)
(74) Vertreter: Wunderlich & Heim Patentanwälte Partnerschaftsgesellschaft mbB

(57) **Zusammenfassung**

Die Erfindung betrifft eine transportable Aufzeichnungsvorrichtung zur Aufnahme von Daten für ein verortetes Straßenzugpanoramabild zur lösbaren Montage in und/oder an einem Fahrzeug. Die transportable Aufzeichnungsvorrichtung weist hierbei eine Recheneinheit, einen Pufferakku, einem Schaltnetzteil , eine Kamera zur Aufnahme eines kontinuierlichen Films sowie eine Befestigungseinrichtung für die Kamera auf. Ferner ist eine Einrichtung zur satellitenbasierten Positions- und Zeitbestimmung sowie eine Stromversorgungseinrichtung für die Stromversorgung der Komponenten vorgesehen. Hierbei sind die Kamera, die Befestigungseinrichtung und die Einrichtung zur satellitenbasierten Positions- und Zeitbestimmung separat und räumlich getrennt von der Recheneinheit ausgebildet. Die transportable Aufzeichnungsvorrichtung ist in Einzelteile zerlegbar. Weiterhin betrifft die Erfindung ein Fahrzeug mit der transportablen Aufzeichnungsvorrichtung.

## Beschreibung

Die Erfindung betrifft eine transportable Aufzeichnungseinrichtung zur Aufnahme von Daten für ein verortetes Straßenzugpanoramabild zur lösbaren Montage in und/oder an einem Fahrzeug. Die transportable Aufzeichnungsvorrichtung weist hierzu eine Recheneinheit, einen Pufferakku und ein Schaltnetzteil zur Umwandlung von Spannung einer bordseitigen Energieversorgung des Fahrzeuges in eine Spannung für die transportable Aufzeichnungseinrichtung auf. Ferner weist die Aufzeichnungseinrichtung eine Kamera zur Aufnahme eines kontinuierlichen Films sowie eine Befestigungseinrichtung zur Positionierung der Kamera in und/oder an dem Fahrzeug auf. Zusätzlich ist eine Einrichtung zur satellitenbasierten Positions- und Zeitbestimmung vorgesehen sowie eine Stromversorgungseinrichtung zur Stromversorgung der Recheneinheit, der Kamera und der Einrichtung zur satellitenbasierten Positions- und Zeitbestimmung. Die Stromversorgungseinrichtung ist mit dem Schaltnetzteil und dem Pufferakku gekoppelt.

Ferner betrifft die Erfindung ein Fahrzeug mit einer transportablen Aufzeichnungseinrichtung zur Aufnahme von Daten für ein verortetes Straßenzugpanoramabild.

Durch die Zunahme der Bevölkerung in städtischen Gebieten nimmt der Verkehr, insbesondere auch der Individualverkehr mit Pkws, zu. Gerade im innerstädtischen Bereich führt diese massive Zunahme der Verkehrsdichte zu Problemen, die einen Mangel an Platzangebot zur Folge haben, der nicht mehr mit einfachen Mitteln gelöst werden kann. Weitere Probleme sind die damit einhergehende Lärmbelästigung durch den Verkehr aber auch die mittlerweile immer kritischer gesehene Belastung durch Schadstoffe.

Studien haben gezeigt, dass ca. 30% des innerstädtischen Verkehrs kein klassischer Beförderungsverkehr ist, sondern auf Fahrzeuge zurückzuführen ist, die auf Parkplatzsuche sind.

Hochrechnungen auf Deutschland ergeben, dass hierbei 1,9 Milliarden Stunden für die Parkplatzsuche aufgewendet werden. Hierbei werden 3,2 Milliarden Liter Treibstoff verbraucht. Insgesamt geht man von einem volkswirtschaftlichen Verlust in Höhe von 40,4 Milliarden EUR aus.

Der Wunsch nach einem Parkraummanagement, der diesen Verkehr zur Parkplatzsuche reduziert, ist daher in zunehmendem Maße gegeben.

Bei derartigen Systemen wird grundsätzlich von zwei Zuständen der Datenermittlung unterscheiden. Zum einen müssten statische Daten beschafft werden, aus denen hervorgeht, wo Parkplätze sind, zu welchen Zeiten man an diesen Parkplätzen parken darf, aber auch Informationen, wie die Parkplätze zu beparken sind, beispielsweise als Längsparker oder Querparker. Dies beinhaltet auch Informationen über Parkverbotszonen sowie eventuelle Preise für das Parken. Derartige Daten werden als statische Daten bezeichnet und stellen die Grundvoraussetzung für ein Parkraummanagement dar.

Der zweite Zustand der Datenermittlung ist das Ermitteln von sogenannten dynamischen Daten, welche Informationen über die aktuelle Parkplatzbelegungssituation darstellen.

Eine Möglichkeit, um statische Daten zu ermitteln ist beispielsweise aus der DE 10 2018 214 510 A1 bekannt. Hierbei können jedoch nur Informationen zum Freisein eines Parkplatzes oder nicht ermittelt werden. Daten, zu welchen Zeiten das Parken erlaubt ist oder ob es sich beispielsweise um eine Einfahrt handelt, können nur schwer festgestellt werden.

Eine bekannte Möglichkeit, um verortete Daten eines Straßenzuges zu ermitteln, ist beispielweise die Verwendung von speziell ausgestatteten Fahrzeugen, wie sie zum Erstellen der Daten für Google Street View genutzt werden. Diese weisen einen komplexen Dachaufbau auf, der oft eine Höhe von mindestens 1 m hat und mehrere separate Einzelkameras sowie einen GPS-Empfänger aufweist. Die Kameras dienen zum Erzeugen von einzelnen Fotos. Für die Stromversorgung dieses Systems sind im Inneren des Fahrzeugs große Batterien installiert. Auch sind in den Fahrzeugen, meist im Kofferraum, fest verbaute voluminöse Server vorgesehen, welche die Daten bearbeiten und aufzeichnen. In ähnlicher Weise sind auch die entsprechenden Fahrzeuge von Apple aufgebaut.

Problematisch an diesen Fahrzeugen ist jedoch, dass sie für Aufnahmen in einer anderen Region erst dorthin transportiert werden müssen. Es ist also notwendig, das Fahrzeug physikalisch komplett dorthin zu transportieren, beispielsweise indem es dorthin gefahren wird. Je nach exakter Lage des neuen Ortes ist oft auch ein Transport mit einer Fähre oder dergleichen notwendig. Auch ist es oft erforderlich, dass diese Fahrzeuge, je nach exakter Konstruktion, vom TÜV abgenommen beziehungsweise zugelassen werden, da die Installation von weiteren Batterien im Fahrzeug sicherheitsrelevant sein kann.

Der Erfindung liegt daher die **Aufgabe** zugrunde, eine Aufzeichnungsvorrichtung anzugeben, welche transportabel ist und die Nachteile der bekannten Systeme überwindet.

Diese Aufgabe wird erfindungsgemäß durch eine Aufzeichnungsvorrichtung mit den Merkmalen des Anspruchs 1 sowie mit einem Fahrzeug mit den Merkmalen des Anspruchs 15 gelöst.

Bevorzugte Ausführungsformen der Erfindung sind in den Unteransprüchen, in der Beschreibung sowie in den Figuren und deren Erläuterung angegeben.

Entsprechend der Erfindung ist eine gattungsgemäße transportable Aufzeichnungsvorrichtung dadurch weitergebildet, dass die Kamera, die Befestigungseinrichtung und die Einrichtung zur satellitenbasierten Positions- und Zeitbestimmung separat und räumlich getrennt von der Recheneinheit vorgesehen sind. Dies kann im Rahmen der Erfindung insbesondere bedeuten, dass die Kamera, die Befestigungseinrichtung und die Einrichtung zur satellitenbasierten Positions- und Zeitbestimmung jeweils ebenfalls separat voneinander ausgebildet sind. Ferner ist die transportable Aufzeichnungsvorrichtung in Einzelelemente teilbar konstruiert, wobei jedes der Einzelelemente maximal passagierflugzeuggroß und passagierflugzeugschwer ist.

Der Erfindung liegt die Erkenntnis zugrunde, dass von bekannten Konstruktionen entsprechend beispielsweise dem Google Street View Systemen abgewichen werden kann, indem zum einen ein anderes Aufzeichnungssystem verwendet wird und zum anderen die Einzelteile oder -elemente derart dimensioniert und konstruiert werden, dass sie zerlegbar sind und einzeln transportiert werden können.

Dies wird zum einen dadurch erreicht, dass, im Gegensatz zu den bekannten Systemen, nicht mehrere Kameras eingesetzt werden, welche Einzelbilder erzeugen, sondern eine Kamera verwendet wird, die zur Aufnahme eines kontinuierlichen Films geeignet ist. Zum anderen ist entsprechend der Erfindung vorgesehen, dass die Einzelteile beziehungsweise die Einzelelemente der transportablen Aufzeichnungsvorrichtung derart dimensioniert und miteinander zu kombinieren sind, dass sie zerlegt werden können beziehungsweise von vorne herein separat und räumlich getrennt von der Recheneinheit vorgesehen sind.

Ferner haben die Einzelteile jeweils eine Größe und ein Gewicht, so dass sie in einem Passagierflugzeug transportiert werden können. Im Sinne der Erfindung wird hierunter insbesondere verstanden, dass sie als normales Gepäck eines Passagiers in einem Flugzeug mitgenommen werden können. Das bedeutet, dass sie in der Regel kein höheres Gewicht als maximal 32 kg, idealerweise unter 23 kg aufweisen und auch entsprechende Dimensionen haben, so dass sie als reguläres Gepäck eingecheckt werden können. Selbstverständlich ist es hierbei auch möglich, dass Einzelelemente ein derartiges Gewicht und Dimensionen haben, dass sie in der Kabine als Handgepäck transportiert werden können.

Entsprechend der Erfindung ergibt sich der Vorteil, dass die gesamte Aufzeichnungsvorrichtung transportabel ist und so relativ leicht von einem Ort zum anderen transportiert werden kann. So ist es beispielsweise möglich, die transportable Aufzeichnungsvorrichtung entsprechend der Erfindung im Flugzeug mitzunehmen, in eine Stadt zu fliegen, dort ein Mietfahrzeug zu mieten, die transportable Aufzeichnungsvorrichtung in und an diesem zu installieren und die entsprechenden Daten für ein verortetes Straßenzugpanoramabild innerhalb einiger Tage zu erzeugen. Anschließend kann die transportable Aufzeichnungsvorrichtung wieder in eine andere Stadt geflogen werden und dort die entsprechenden Daten erzeugt werden.

In einer bevorzugten Ausführungsform ist eine Energiebegrenzungseinrichtung vorgesehen, welche die maximale Stromstärke, welche von der bordseitigen Energieversorgung des Fahrzeuges gefordert wird, begrenzt. Entsprechend der erfindungsgemäßen Lösung sind keine großen separaten Energiespeicher, also Batterien oder Akkus der transportablen Aufzeichnungsvorrichtung in dem Fahrzeug vorgesehen, wie es entsprechend der googleartigen Systeme der Fall ist. Dies bedeutet andererseits, dass ausschließlich Energie aus dem bordseitigen Energieversorgungssystem des Fahrzeuges verwendet werden kann. Meist weist dieses ein 12-Volt-System auf, dessen Bordnetzsteckdose, meist der Zigarettenanzünder, nur eine maximale Stromstärke verkraftet. Durch die Verwendung der erfindungsgemäßen Energiebegrenzungseinrichtung kann somit sichergestellt werden, dass das bordseitige Energieversorgungsnetz des Fahrzeuges nicht überfordert wird.

Für eine weitere Anpassung der transportablen Aufzeichnungsvorrichtung an die ausschließliche Verwendung einer bordseitigen Energieversorgung des Fahrzeuges ist vorgesehen, dass die Stromversorgungseinrichtung über den Pufferakku ihre Energie erhält.

Moderne Fahrzeuge haben oft eine Start-Stopp-Automatik, so dass hierbei beim bordseitigen Energieversorgungssystem Stromspitzen oder -senken, beispielsweise beim erneuten Starten des Motors oder beim Verwenden einer Start-Stopp-Automatik, entstehen. Diese Stromspitzen oder kurzzeitigen Blackouts können dadurch gepuffert werden, dass die Stromversorgungseinrichtung grundsätzlich ihre Energie über den Pufferakku erhält.

Vorteilhaft ist es, wenn die Stromversorgungseinrichtung, der Pufferakku und das Schaltnetzteil ausgebildet sind, elektrische Energie mit einer Spannung zwischen 11 Volt und 16 Volt, insbesondere im Bereich von 14,4 Volt zur Verfügung zu stellen. Grundsätzlich kann auch ein Transformator, ein entsprechendes Netzteil und/oder ein Spannungswandler anstelle des Schaltnetzteil verwendet werden. Wesentlich dabei ist, dass das verwendete Gerät die Spannung des Fahrzeuges auf das gewünschte Spannungsniveau umwandelt. Entsprechend der Erfindung wurde erkannt, dass sich diese Spannung besonders eignet, die weiteren Komponenten der transportablen Aufzeichnungsvorrichtung mit Strom zu versorgen. Hierbei handelt es sich insbesondere um die Kamera, die Einrichtung zur satellitenbasierten Position- und Zeitbestimmung sowie die Recheneinheit.

Grundsätzlich kann als Pufferakku eine beliebige Art von Akku eingesetzt werden. Als vorteilhaft hat sich ein Lithiumeisenphosphat-Akku herausgestellt. Dieser bietet insbesondere den Vorteil, dass er im Vergleich mit Lithium-Ionen- oder Lithium-Polymer-Akkus relativ robust ist. Das heißt, er ist insbesondere stabil und unempfindlich gegenüber Schlägen oder Erschütterungen. Dies ist vorteilhaft, da der Akku in Fahrzeugen bei der Aufnahme der Daten verwendet wird. Gegenüber Blei-Säure und Blei-Gel Akkus besteht der Vorteil im geringeren Gewicht und der Erlaubnis zur Mitnahme im Flugzeug und zum Versand.

In diesem Zusammenhang ist es bevorzugt, wenn der Pufferakku eine Kapazität von weniger als 100 Wh, insbesondere im Bereich von 30 bis 40 Wh aufweist. Eine derartige Dimensionierung ermöglicht es, den Pufferakku beziehungsweise die transportable Aufzeichnungseinrichtung im Flugzeug, teilweise sogar im Handgepäck, zu transportieren, ohne dass hierfür besondere Genehmigungen oder dergleichen zuvor eingeholt werden müssen. Auch reicht eine derartige Kapazität aus, um die transportable Aufzeichnungsvorrichtung mit ihren Einzelelementen mit einem ausreichenden Energiepuffer im Rahmen der Energieversorgung zu versorgen.

Bevorzugt weist die Stromversorgungseinrichtung Stromanschlüsse zur Versorgung der Kamera und der Einrichtung zur satellitenbasierten Positions- und Zeitbestimmung auf. Da sowohl die Kamera als auch die Einrichtung zur satellitenbasierten Positions- und Zeitbestimmung als separate Bauteile vorgesehen sind, sind diese auf eine Energieversorgung angewiesen. Grundsätzlich wäre es auch möglich, diese direkt mit der Energieversorgung beziehungsweise mit dem Energieversorgungssystem des Fahrzeuges zu verbinden, jedoch wären dann die Vorteile, wie eine Pufferung bei kurzzeitigen Stromausfällen und die Überwachung der benötigten Energie, nicht oder nur schwer zu realisieren.

In einer bevorzugten Ausführungsform ist die Recheneinheit passiv gekühlt ausgeführt. Dies bedeutet, dass die Recheneinheit insbesondere keine aktiven Lüfter oder dergleichen aufweist, sondern lediglich ausreichend groß dimensionierte Kühlkörper besitzt. Zusätzlich können auch die weiteren Einheiten der Recheneinheit derart ausgebildet sein, dass sie nur wenig Abwärme produzieren, so dass die notwendige Kühlleistung gering sein kann.

Diesbezüglich ist es auch bevorzugt, wenn die gesamte Recheneinheit keine beweglichen Teile aufweist. Hierdurch ist die Recheneinheit robuster ausgelegt, so dass sie einfacher zu transportieren ist und auch weniger fehler- sowie ausfallanfällig ist. Dies ist insbesondere wichtig, da sie, wie bereits beschrieben, in einem Fahrzeug montiert wird, in dem zwangsläufig Erschütterungen und dergleichen auftreten. Auch wird sie durch weniger oder keine beweglichen Teile staubresistenter, was wiederum den Transport deutlich vereinfacht.

Vorteilhaft ist es, wenn die Recheneinheit eine HDMI-Capture-Karte aufweist und insbesondere die Daten der Kamera, welche einen kontinuierlichen Film erzeugt, aufnimmt. Grundsätzlich könnten zwar auch andere Schnittstellen hierfür eingesetzt werden, jedoch bietet eine HDMI-Schnittstelle eine einfache und praktikable Lösung hierzu an.

Als weiteres Bauteil kann in der transportablen Aufzeichnungsvorrichtung eine Aufbereitungseinrichtung vorgesehen sein, welche ausgebildet ist, zumindest Zeitdaten der Einrichtung zur satellitenbasierten Positions- und Zeitbestimmung in ein für die Kamera aufnehmbares Format als codierte Zeitdaten aufzubereiten und der Kamera zur Aufnahme weiterzuleiten. Mit Hilfe dieser Aufbereitungseinrichtung ist es möglich, mittels der Kamera zusätzlich zum Film Zeitdaten aufzunehmen. In Kombination mit den Zeitdaten der Einrichtung zur satellitenbasierten Positions- und Zeitbestimmung, welche ebenfalls von der Recheneinheit ausgewertet beziehungsweise gespeichert werden, ist es möglich, den Film exakt zu verorten. So können hochgenaue Daten verwendet werden, um das verortete Straßenzugpanoramabild zu erzeugen.

Der Transport von einigen Komponenten der transportablen Aufzeichnungsvorrichtung kann dadurch erleichtert werden, dass die Recheneinheit, die Stromversorgungseinrichtung, der Pufferakku und/oder das Schaltnetzteil in einem gemeinsamen, insbesondere kofferartigen Gehäuse vorgesehen sind. Anders ausgedrückt kann dieser Koffer ein Einzelelement der transportablen Aufzeichnungsvorrichtung darstellen. Die weiteren Einzelelemente können beispielweise die Kamera, die Einrichtung zur satellitenbasierten Positions- und Zeitbestimmung sowie die Befestigungseinrichtung zur Positionierung der Kamera in und/oder am Fahrzeug sein.

Das kofferartige Gehäuse, welches auch als Koffer bezeichnet werden kann, ist derart ausgelegt, dass es im Inneren des Fahrzeuges beispielsweise mittels den dort meist vorhandenen Isofix-Befestigungen oder vorhandenen Sitzgurten auf einem Sitz des Fahrzeuges fixierbar ist. Dies wiederum erleichtert den flexiblen Einsatz der transportablen Aufzeichnungsvorrichtung, da keine speziellen komplizierten Befestigungspunkte in dem Fahrzeug vorhanden sein müssen.

Zusätzlich kann die transportable Aufzeichnungsvorrichtung auch einen Lidar-Sensor aufweisen. Es kann sich beispielsweise um einen 1D, jedoch auch um einen 2D oder 3D-Lidar-Sensor handeln. Mit diesem können während der Aufnahme des kontinuierlichen Films über die Kamera zusätzliche Entfernungsdaten ermittelt werden, die als zusätzliche Daten für das verortete Straßenzugpanoramabild zur Verfügung stehen und weitere Informationen für die Analyse von möglichen Parkplätzen liefern können.

Ferner betrifft die Erfindung ein Fahrzeug mit einer erfindungsgemäßen transportablen Aufzeichnungsvorrichtung zum Ermitteln von Daten für ein verortetes Straßenzugpanoramabild.

Die Erfindung wird nachfolgend anhand eines schematischen Ausführungsbeispiels, unter Bezugnahme auf die Figuren näher erläutert. Hierbei zeigen:
- Fig. 1: eine schematische Ansicht einer erfindungsgemäßen transportablen Aufzeichnungsvorrichtung zur Aufnahme von Daten für ein verortetes Straßenzugpanoramabild; und
- Fig. 2: ein stark vereinfachtes Straßenzugpanoramabild.

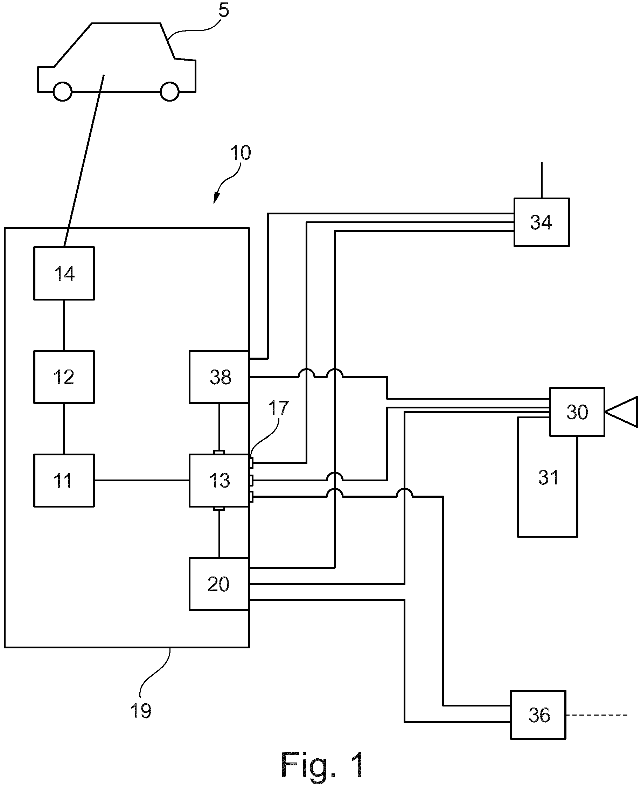

In Fig. 1 ist eine stark vereinfachte schematische Darstellung einer erfindungsgemäßen transportablen Aufzeichnungsvorrichtung 10 zum Aufnehmen von Daten für ein verortetes Straßenzugpanoramabild 60 dargestellt.

Die erfindungsgemäße transportable Aufzeichnungsvorrichtung 10 weist mehrere Einzelkomponenten auf. Ein Großteil der Komponenten ist in einem gemeinsamen Gehäuse oder Koffer 19 vorgesehen.

In diesem befindet sich eine Energiebegrenzungseinrichtung 14, ein Schaltnetzteil 12, ein Pufferakku 11 und eine Stromversorgungseinrichtung 13. Die Stromversorgungseinrichtung 13 wiederum weist mehrere Stromversorgungsanschlüsse 17 auf. Zusätzlich befinden sich in dem Gehäuse 19 eine Recheneinheit 20 sowie eine Aufbereitungseinrichtung 38.

Extern von diesem gemeinsamen Gehäuse 19 sind entsprechend der Erfindung zumindest eine Kamera 30 sowie eine Einrichtung zur satellitenbasierten Positions- und Zeitbestimmung 34 vorgesehen. Die Kamera 30 ist auf einer Befestigungseinrichtung 31 angebracht.

Fakultativ kann ein Lidar-Sensor 36 vorhanden sein.

Bei der Kamera 30 handelt es sich bevorzugt um ein Modell, welches einen kontinuierlichen Film im 4K-UHD-Standard mit mindestens 24 Bildern pro Minute ausgeben kann. Diese Kamera wird mittels der Befestigungseinrichtung 31 innerhalb des Fahrzeuges 5 angebracht, so dass sie während das Fahrzeug 5 bewegt wird, aus einem seitlichen Fenster filmen kann und dabei den kontinuierlichen Film aufzeichnet.

Bei der Einrichtung zur satellitenbasierten Positions- und Zeitbestimmung 34 kann es sich beispielsweise um eine Einrichtung zur satellitenbestimmten Positions- und Zeitbestimmung 34 entsprechend dem GPS-, Galileo-, Glossar- und/oder Beidou-Standard handeln. Es ist auch möglich, dass die Einrichtung mehrere dieser Standards gleichzeitig nutzt, um die Qualität der ermittelten Position zu erhöhen.

Als Lidar-Scanner oder -Sensor 36 wird bevorzugt ein 1D-Lidar-Scanner verwendet, welcher den Abstand zwischen dem nächsten Objekt und dem Lidar-Scanner 36 selbst bestimmt. Dieser ist bevorzugt senkrecht zur Fahrtrichtung des Fahrzeuges 5 analog wie die Kamera 30 ausgerichtet. Selbstverständlich können auch 2D oder 3D-Lidar-Sensoren verwendet werden, welche entsprechend eine größere Datenmenge und weitere Informationen ermitteln.

Im Folgenden wird die grundlegende Funktionalität der erfindungsgemäßen transportablen Aufzeichnungsvorrichtung 10 beschrieben, bevor auf ihren genauen Aufbau eingegangen wird, der insbesondere wichtig für die Möglichkeit des einfachen Transportes ist.

Zum Ermitteln und zur Aufnahme der Daten für das verortete Straßenzugpanoramabild 60 wird, wie bereits beschrieben, sowohl das Gehäuse 19 mit der Recheneinheit 20 und den verschiedenen im Rahmen der Stromversorgung notwendigen Untereinheiten, der Begrenzungseinrichtung 14, dem Schaltnetzteil 12, dem Akku 11 und der Stromversorgung 13 in einem Fahrzeug 5 montiert. Zusätzlich wird die Einrichtung zur satellitenbasierten Positions- und Zeitbestimmung 34 für einen besseren Empfang auf dem Dach des Fahrzeuges 5 angebracht. Die Kamera 30 wird mit Hilfe ihrer Befestigungseinrichtung 31 auf dem Rücksitz des Fahrzeuges 5 montiert. Hierbei ist es vorgesehen, dass die Kamera 30 seitlich aus einem Fahrzeugfenster hinaus ausgerichtet ist, so dass sie eine seitliche Aufnahme machen kann. Diese Aufnahme wird bevorzugt im Hochformat angefertigt. Wichtig ist hierbei, dass insbesondere der Aufnahmewinkel auch den Bereich beinhaltet, der genau senkrecht zur Fahrtrichtung des Fahrzeuges 5 liegt.

Zusätzlich kann der Lidar-Sensor 36, wenn ein derartiger Sensor vorgesehen ist, entweder mittels der Befestigungseinrichtung 31 der Kamera 30 angebracht werden oder auch separat, beispielsweise auf der Stoßstange oder der Außentür des Fahrzeuges 5.

Zum Ermitteln der Daten für das verortete Straßenzugpanoramabild 60 wird während das Fahrzeug 5 durch eine Stadt, beispielsweise entlang einer Straße, bewegt wird, mittels der Kamera 30 ein kontinuierlicher Film hiervon aufgenommen. Zeitgleich werden mittels der Einrichtung zur satellitenbasierten Positions- und Zeitbestimmung 34 Daten aufgenommen. Diese werden an die Aufbereitungseinrichtung 38 weitergeleitet. In dieser werden die Daten in ein für die Kamera 30 aufnehmbares Format umcodiert und an diese weitergeleitet. Es handelt sich insbesondere um eine akustische Codierung, welche die Zeitdaten beinhaltet, die so zeitgleich mit dem Film aufgenommen werden können. Dieser Film wird bevorzugt über eine HDMI-Capture-Karte in der Recheneinheit 20 auf einen Speicher abgespeichert. Zusätzlich werden auch die Positions- und Zeitdaten der Einrichtung zur satellitenbasierten Positions- und Zeitbestimmung 34 auf dem Speicher der Recheneinheit 20 gespeichert. In ähnlicher Weise können auch die Daten des Lidar-Sensors 36 auf dem Speicher der Recheneinheit 20 gespeichert werden.

Hierfür ist es möglich, dass der Lidar-Sensor 36 ebenfalls einen Eingang für die Daten der Einrichtung zur satellitenbasierten Positions- und Zeitbestimmung aufweist. Dies ist in Fig. 1 nicht gezeigt.

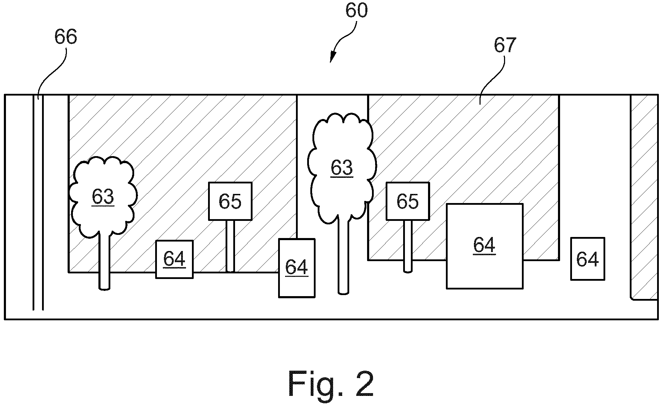

Basierend auf den so aufgezeichneten Daten aus dem Film der Kamera 30 in Verbindung mit dem genauen Zeitstempel und den Positionsdaten der Einrichtung zur satellitenbasierten Positions- und Zeitbestimmung 34 kann so der genaue Ort der Aufnahme bestimmt werden, woraus dann ein verortetes Straßenzugpanoramabild 60, wie im Folgenden in Fig. 2 dargestellt, erzeugt werden kann.

Zentral an der Erfindung der transportablen Aufzeichnungsvorrichtung 10 ist, dass sie derart dimensioniert und konstruiert ist, dass ihre Einzelkomponenten relativ einfach im Flugzeug mitgenommen werden können. Das bedeutet, dass die transportable Aufzeichnungsvorrichtung 10 von einem Passagier mitgenommen werden kann, entweder im Handgepäck oder als eingechecktes Gepäck. Es ist also nicht erforderlich, Komponenten per Flugfracht zu transportieren.

Zu diesem Zweck ist es beispielsweise notwendig, dass keine großen separaten Batterien in der transportable Aufzeichnungsvorrichtung 10 vorgesehen sind. Als Energieversorgung darf lediglich die Energieversorgung des Fahrzeuges 5 beziehungsweise dessen bordseitiges Energieversorgungssystem benötigt werden. Daher sind entsprechend der Erfindung mehrere Komponenten vorgesehen, um einen problemlosen Betrieb der erfindungsgemäßen Aufzeichnungsvorrichtung 10 unter Verwendung lediglich der bordseitigen Energieversorgung des Fahrzeuges 5 zu ermöglichen.

Hierfür ist die Begrenzungseinrichtung 14, das Schaltnetzteil 12, der Pufferakku 11 und die zentrale Stromversorgung 13 vorgesehen. Die Begrenzungseinrichtung 14 dient dem Zweck, sicherzustellen, dass vom bordseitigen Energieversorgungssystem des Fahrzeugs maximal so viel Energie angefordert beziehungsweise abgezogen wird, wie es das bordseitige Energieversorgungssystem des Fahrzeugs 5 verkraftet. Dies verhindert, dass eventuell Sicherungen oder dergleichen im Fahrzeug 5 die Stromversorgung sperren.

Mittels des Schaltnetzteils 12 kann die vom Fahrzeug 5 vorgesehene Energieversorgung in eine Stromstärke und Spannung umgewandelt werden, wie sie für die transportable Aufzeichnungsvorrichtung 10 notwendig ist.

Das Weiterleiten der Energie über den Pufferakku 11 hat den Zweck, Stromschwankungen, die im Verbrauch der Energie in den Einzelkomponenten der transportablen Aufzeichnungsvorrichtung 10 vorkommen, abzupuffern. Es ist vorgesehen, dass der Akku 11 konstant von der Energieversorgung des Fahrzeuges 5 mit Energie versorgt wird, diese jedoch flexibel an die Komponenten, wie die Kamera 30, den Lidarsensor 36 oder auch die Einrichtung zur satellitenbasierten Positions- und Zeitbestimmung 34 über die Stromversorgungseinrichtung 13 mit ihren Stromanschlüssen 17 abgeben kann. Im Sinne der Erfindung bedeutet konstant, dass der Akku dauerhaft mit der Energieversorgung verbunden ist. Dies berücksichtigt auch, dass die Spannungsversorgung des Fahrzeuges nicht statisch ist, sondern auch Unterspannungssituationen und kurzfristige Ausfälle auftreten. Selbiges gilt auch für die Recheneinheit 20. Dies ist insbesondere dann wichtig, wenn das Fahrzeug 5 über eine Start-Stopp-Automatik verfügt, die sogenannte Brown- und Blackouts erzeugt, wodurch keine kontinuierliche Stromversorgung durch das Fahrzeug 5 zur Verfügung gestellt wird.

Wie in Fig. 1 dargestellt, ist ein Großteil der Komponenten in einem gemeinsamen Gehäuse 19 vorgesehen. Die Kamera 30 mit ihrer Befestigungseinrichtung 31, die Einrichtung zur satellitenbasierten Positions- und Zeitbestimmung 34 als auch der Lidar-Sensor 36 sind jedoch separat hiervon vorgesehen. Dies hat den Vorteil, dass die Komponenten einzeln von einem Passagier in einem Flugzeug transportiert werden können, wie zuvor beschrieben.

In Fig. 2 ist ein stark schematisiertes Beispiel für ein erzeugtes Straßenzugpanoramabild 60 dargestellt. Bei einer Aufbereitung der Daten werden, die mittels der Kamera 30 erzeugten kontinuierlichen Filmdaten verarbeitet und zu einem Straßenzugpanoramabild 60, welches möglichst keine oder kaum optische Verzerrungen aufweist, zusammengesetzt. Auf dem Straßenzugpanoramabild 60 können dann einzelne Objekte 64 wie Autos oder Lkws, die sich auf Parkplätzen befinden, aber auch Schilder 65 erkannt werden. Auf diesen Schildern 65 können beispielsweise Parkinformationen vorhanden sein. Auch werden beispielsweise komplette beziehungsweise Ausschnitte von Laternen 66 dargestellt. Wesentlich hierbei ist es, dass der Straßenrand vorhanden ist, um ausreichend Daten für statische Informationen für das Parkmanagementsystem zu ermitteln. Bei den in Fig. 2 schraffiert dargestellten Objekten handelt es sich beispielsweise um im Hintergrund befindliche Häuser 67.

Mit der erfindungsgemäßen transportablen Aufzeichnungsvorrichtung 10 ist es somit möglich, flexibel an unterschiedlichen Orten Daten für ein verortetes Straßenzugpanoramabild aufzunehmen.

## Patentansprüche

1. Transportable Aufzeichnungsvorrichtung (10) zur Aufnahme von Daten für ein verortetes Straßenzugpanoramabild (60) zur lösbaren Montage in und/oder an einem Fahrzeug (5) mit:
einer Rechenreinheit (20),
einem Pufferakku (11),
einem Schaltnetzteil (12) zur Umwandlung von Spannung einer bordseitigen Energieversorgung des Fahrzeuges (5) in eine Spannung für die transportable Aufzeichnungsvorrichtung (10),
einer Kamera (30) zur Aufnahme eines kontinuierlichen Films,
einer Befestigungseinrichtung (31) zur Positionierung der Kamera (30) in und/oder an dem Fahrzeug (5),
einer Einrichtung (34) zur satellitenbasierten Positions- und Zeitbestimmung,
einer Stromversorgungseinrichtung (13) zur Stromversorgung der Recheneinheit (20), der Kamera (30) und der Einrichtung (34) zur satellitenbasierten Positions- und Zeitbestimmung, welche mit dem Schaltnetzteil (12) und dem Pufferakku (11) gekoppelt ist,
**dadurch gekennzeichnet,**
**dass** die Kamera (30), die Befestigungseinrichtung (31) und die Einrichtung (34) zur satellitenbasierten Positions- und Zeitbestimmung separat und räumlich getrennt von der Recheneinheit (20) vorgesehen sind und
**dass** die transportable Aufzeichnungsvorrichtung (10) in Einzelelemente teilbar ausgebildet ist, wobei jedes der Einzelelemente maximal eine Größe und ein Gewicht aufweist, welches für den Transport in einem Passagierflugzeug geeignet ist.

2. Transportable Aufzeichnungsvorrichtung (10) nach Anspruch 1,
**dadurch gekennzeichnet,**
**dass** eine Energiebegrenzungs-Einrichtung (14) vorgesehen ist, welche die maximale Stromstärke, welche von der bordseitigen Energieversorgung des Fahrzeuges (5) gefordert wird, begrenzt.

3. Transportable Aufzeichnungsvorrichtung (109 nach Anspruch 1 oder 2,
**dadurch gekennzeichnet,**
**dass** die Stromversorgungseinrichtung (13) über den Pufferakku (11) ihre Energie erhält.

4. Transportable Aufzeichnungsvorrichtung (10) nach einem der Ansprüche 1 bis 3,
**dadurch gekennzeichnet ,**
**dass** die Stromversorgungseinrichtung (13), der Pufferakku (11) und das Schaltnetzteil (12) ausgebildet sind, um elektrische Energie mit einer Spannung zwischen 11 V und 16 V, insbesondere 14,4 V, zur Verfügung zu stellen.

5. Transportable Aufzeichnungsvorrichtung (10) nach einem der Ansprüche 1 bis 4,
**dadurch gekennzeichnet,**
**dass** der Pufferakku (11) ein Lithiumeisenphosphat-Akku ist.

6. Transportable Aufzeichnungsvorrichtung (10) nach einem der Ansprüche 1 bis 5,
**dadurch gekennzeichnet,**
**dass** der Pufferakku (11) eine Kapazität von weniger als 100 Wh, insbesondere im Bereich von 30 Wh bis 40 Wh, aufweist.

7. Transportable Aufzeichnungsvorrichtung (10) nach einem der Ansprüche 1 bis 6,
**dadurch gekennzeichnet,**
**dass** die Stromversorgungseinrichtung (13) Stromanschlüsse (17) zur Versorgung der Kamera (30) und der Einrichtung (34) zur satellitenbasierten Positions- und Zeitbestimmung aufweist.

8. Transportable Aufzeichnungsvorrichtung (10) nach einem der Ansprüche 1 bis 7,
**dadurch gekennzeichnet,**
**dass** die Recheneinheit (20) passiv gekühlt ausgeführt ist.

9. Transportable Aufzeichnungsvorrichtung (10) nach einem der Ansprüche 1 bis 8,
**dadurch gekennzeichnet,**
**dass** die Recheneinheit (20) keine beweglichen Teile aufweist.

10. Transportable Aufzeichnungsvorrichtung (10) nach einem der Ansprüche 1 bis 9,
**dadurch gekennzeichnet,**
**dass** die Recheneinheit (20) eine HDMI-Capture Karte aufweist.

11. Transportable Aufzeichnungsvorrichtung (10) nach einem der Ansprüche 1 bis 10,
**dadurch gekennzeichnet,**
**dass** eine Aufbereitungseinrichtung (38) vorgesehen ist, welche ausgebildet ist, zumindest Zeitdaten der Einrichtung (34) zur satellitenbasierten Positions- und Zeitbestimmung in ein für die Kamera (30) aufnehmbares Format als codierte Zeitdaten aufzubereiten und der Kamera (30) zur Aufnahme weiterzuleiten.

12. Transportable Aufzeichnungsvorrichtung (10) nach einem der Ansprüche 1 bis 11,
**dadurch gekennzeichnet,**
**dass** die Recheneinheit (20), die Stromversorgungseinrichtung (13), der Pufferakku (11) und das Schaltnetzteil (12) in einem gemeinsamen, insbesondere kofferartigen Gehäuse (19) vorgesehen sind.

13. Transportable Aufzeichnungsvorrichtung (109 nach Anspruch 12,
**dadurch gekennzeichnet,**
**dass** das kofferartige Gehäuse (19) im Innenraum des Fahrzeuges (5), insbesondere mittels Isofix-Befestigung und/oder vorhandener Sitzgurte auf einem Sitz des Fahrzeuges (5), fixierbar ist.

14. Transportable Aufzeichnungvorrichtung (10) nach einem der Ansprüche 1 bis 13,
**dadurch gekennzeichnet,**
**dass** ein Lidar-Sensor (36) vorgesehen ist.

15. Fahrzeug (5) **gekennzeichnet durch** eine montierte transportable Aufzeichnungsvorrichtung (10) nach einem der Ansprüche 1 bis 14,
welche aus dem Fahrzeug (5) entfernbar ist.
